# EUROPEAN PATENT APPLICATION

(11) **EP 2 385 647 A2**
(43) Date of publication of application: **09.11.2011**
(21) Application number: 11003745.4
(22) Date of filing: 06.05.2011
(51) Int. Cl.: H04L 1/18, H04L 1/16, H04L 5/00

(54) **Method of multiplexing and transmission of uplink control information and related communication device**

(30) Priority: 06.05.2010 US 331840 P
(71) Applicant: HTC Corporation, Taoyuan County 330 (TW)
(72) Inventor: Jen, Yu-Chih, Taoyuan City Taoyuan County 330 (TW)
(74) Representative: Klang, Alexander H.

(57) **Abstract**

A method of handling an acknowledgement/negative acknowledgement (ACK/NACK) transmission for a mobile device with a carrier aggregation (CA) in a wireless communication system is disclosed. The method comprises receiving a configuration or an activation of the CA with at least one uplink (UL) component carrier and a plurality downlink (DL) component carriers from a network of the wireless communication system, and performing a simultaneous transmission of a scheduling request (SR) and the ACK/NACK, which corresponds to DL transmissions on the plurality of DL component carriers, with at least one PUCCH resource or on at least one PUCCH resource in a subframe according to one of a plurality of ACK/NACK transmission schemes configured or supported by the network.

## Description

### Background of the Invention

### 1. Field of the Invention

The present invention relates to a method used in a wireless communication system and related communication device, and more particularly, to a method of multiplexing and transmission of uplink control information in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control.

UL control information in the LTE system includes an acknowledgement/negative acknowledgement (ACK/NACK) for downlink (DL) data, a channel quality indicator (CQI), a scheduling request (SR) and multiple-input multiple-output (MIMO) parameters (e.g. a precoding matrix indicator (PMI) and a rank indicator (RI)) of the UE. The UL control information may not be transmitted along with the data in the LTE system, i.e., transmitted by using a dedicated resource. In this situation, the UE transmits the UL control information to the eNB on a physical uplink (UL) control channel (PUCCH) in the LTE system. Resource blocks allocated to the PUCCH in a subframe, i.e., a PUCCH region, locate on edges of a system bandwidth for a low out of band (OOB) emission and a low constraint on the UL data scheduling. Besides, the resource blocks hop within slots (intra-subframe hopping) or between slots (inter-subframe hopping) for gaining frequency diversity. Moreover, UL control information of a plurality of UEs can be multiplexed in the PUCCH region by using a base sequence with different cyclic time shifts in a frequency domain, and different orthogonal block spreading codes in a time domain, so as to exploit the PUCCH region efficiently. On the other hand, a sounding reference signal (SRS) and the PUCCH cannot be transmitted in the same subframe in the LTE system. If the SRS and the PUCCH are scheduled to be transmitted in the same subframe, the UE drops the SRS or shortens the PUCCH before the transmission.

On the other hand, the UE may also transmit the UL control information along with data when the dedicated resource is not available. In this situation, the UE first multiplexes the UL control information and the data, and then transmits the multiplexed result to the eNB on a physical uplink shared channel (PUSCH) in the LTE system. Please note that, the UE can only select the one of the PUCCH and the PUSCH to transmit the UL control information but not both so as to maintain a single carrier property, i. e. , a low peak to average power ratio (PAPR). Besides, the CQI is transmitted periodically by the UE when using the PUCCH, but is transmitted aperiodically, i.e., triggered by a request from the eNB, when using the PUSCH.

A long term evolution-advanced (LTE-A) system, as its name implies, is an evolution of the LTE system. The LTE-A system targets faster switching between power states, improves performance at the coverage edge of the eNB, and includes subjects, such as bandwidth extension, coordinated multipoint transmission/reception (CoMP), UL multiple-input multiple-output (MIMO), etc.

For bandwidth extension, a carrier aggregation (CA) is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. An LTE-A specification supports CA for both continuous and non-continuous component carriers with each component carrier limited to a maximum of 110 resource blocks. The CA increases bandwidth flexibility by aggregating the non-continuous component carriers. A component carrier is either used as a UL component carrier or a downlink (DL) component carrier, but not both. Further, there is a one-to-one correspondence between the UL component carrier and the DL component carrier, i.e., each UL component carrier is paired with a corresponding DL component carrier.

When the UE is configured with the CA, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs). The numbers of UL and DL secondary component carriers are arbitrary, and are related to the UE capability and available radio resource. The UL and DL primary component carriers are used for establishing and re-establishing the radio resource control (RRC), and transmitting and receiving the system information. The UL or DL primary component carrier can not be de-activated, but can be changed by a handover procedure with the RACH procedure.

For an efficient use of the resource, a simultaneous transmission of the SR and the ACK/NACK corresponding to a single DL component carrier is supported in the LTE system by using a SR resource or an ACK/NACK resource. However, the simultaneous transmission of the SR and the ACK/NACK can not be realized in the LTE-A system since due to carrier aggregation, novel ACK/NACK transmission schemes for multiple ACK/NACKs corresponding to multiple DL component carriers are required, and either the SR resource or the ACK/NACK resource allocated in the LTE system is not sufficient for a simultaneous transmission of the multiple ACK/NACKs and the SR. Therefore, a novel simultaneous SR and ACK/NACK transmission scheme is needed to be developed. On the other hand, a simultaneous transmission of the PUCCH and the PUSCH is not allowed in the LTE system to maintain the single carrier property, i.e., the low PAPR. However, with an improvement of the power amplifier and IC technology, the single carrier property may not be necessary so as to allow a simultaneous transmission of the PUCCH and the PUSCH. Therefore, resources for transmitting the UL control information are increased, and the simultaneous transmission of the multiple ACK/NACKs and the SR becomes possible in the LTE-A system. Accordingly, parameters and protocols as well as respective signalings for transmitting the SR and the ACK/NACK in the LTE system must be extended or modified for the LTE-A system.

### Summary of the Invention

The disclosure therefore provides a method and related communication device for multiplexing and transmission of uplink control information to solve the abovementioned problems.

A method of handling an acknowledgement/negative acknowledgement (ACK/NACK) transmission for a mobile device with a carrier aggregation (CA) in a wireless communication system is disclosed. The method comprises receiving a configuration or an activation of the CA with at least one uplink (UL) component carrier and a plurality downlink (DL) component carriers from a network of the wireless communication system, and performing a simultaneous transmission of a scheduling request (SR) and the ACK/NACK, which corresponds to DL transmissions on the plurality of DL component carriers, with at least one PUCCH resource or on at least one PUCCH resource in a subframe according to one of a plurality of ACK/NACK transmission schemes configured or supported by the network.

A method of handling a single carrier property for a mobile device with a carrier aggregation (CA) in a wireless communication system is disclosed. The method comprises receiving a configuration or an activation of the CA with at least one uplink (UL) component carrier and a plurality of downlink (DL) component carriers from a network of the wireless communication system, and deciding whether to obey the single carrier property according to at least one of a network indication, at least one configured threshold value, a channel estimation, a channel measurement, a positioning measurement and a mobility measurement.

A method of handling uplink (UL) control information transmission for a mobile device with a carrier aggregation (CA) in a wireless communication system is disclosed. The method comprises receiving a configuration or an activation of the CA with at least one UL component carrier and a plurality downlink (DL) component carriers from a network of the wireless communication system, transmitting part of the UL control information in a physical UL control channel (PUCCH) format on a PUCCH resource of a plurality of PUCCH resources of a UL component carrier, and transmitting the rest of the UL control information and physical UL shared channel (PUSCH) data which are multiplexed on a PUSCH; wherein the UL control information are required for DL signaling or transmissions on the plurality DL component carriers, a plurality of PUCCH transmission schemes or both.

A method of handling uplink (UL) control information transmission for a mobile device with a carrier aggregation (CA) in a wireless communication system is disclosed. The method comprises receiving a configuration or an activation of the CA with at least one UL component carrier and a plurality downlink (DL) component carriers from a network of the wireless communication system, transmitting part of the UL control information in at least one physical UL control channel (PUCCH) format on at least one PUCCH resource of a UL component carrier, and transmitting the rest of the UL control information and physical UL shared channel (PUSCH) data which are multiplexed on a PUSCH; wherein the UL control information are required for DL signaling or transmissions on the plurality DL component carriers, a plurality of PUCCH transmission schemes or both.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of an exemplary wireless communication system according to the present disclosure.

Fig. 2 is a schematic diagram of an exemplary communication device according to the present disclosure.

Fig. 3 is a schematic diagram of communication protocol layers for an exemplary wireless communication system.

Fig. 4 is a flowchart of an exemplary process according to the present disclosure.

Fig. 5 is a flowchart of an exemplary process according to the present disclosure.

Fig. 6 is a flowchart of an exemplary process according to the present disclosure.

Fig. 7 is a flowchart of an exemplary process according to the present disclosure.

### Detailed Description

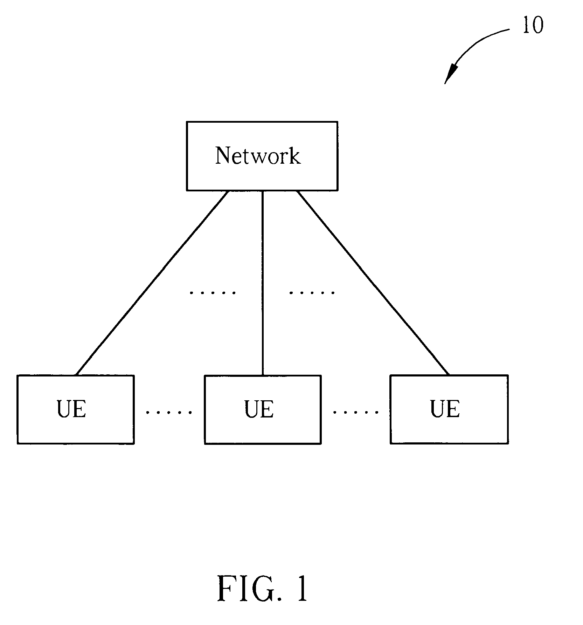

Please refer to Fig. 1, which is a schematic diagram of a wireless communication system 10 according to an example of the present disclosure. The wireless communication system 10, such as a long term evolution-advanced (LTE-A) system or other mobile communication systems supporting a carrier aggregation (CA), is briefly composed of a network and a plurality of user equipments (UEs) . In Fig. 1, the network and the UEs are simply utilized for illustrating the structure of the wireless communication system 10. Practically, the network can be referred as to an E-UTRAN (evolved-UTAN) comprising a plurality of evolved Node-Bs (eNBs) and relays in the LTE-A system. The UEs can be mobile devices such as mobile phones, laptops, tablet computers, electronic books, and portable computer systems. Besides, the network and the UE can be seen as a transmitter or receiver according to transmission direction, e.g., for an uplink (UL), the UE is the transmitter and the network is the receiver, and for a downlink (DL), the network is the transmitter and the UE is the receiver.

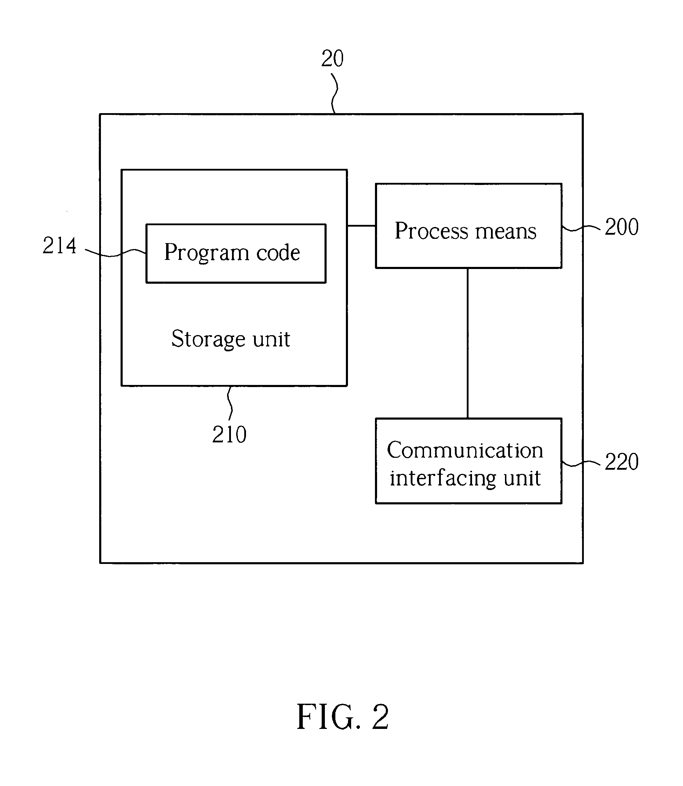

Please refer to Fig. 2, which is a schematic diagram of a communication device 20 according to an example of the present disclosure. The communication device 20 can be the UE or the network shown in Fig. 1, but is not limited herein. The communication device 20 may include a processor 200 such as a microprocessor or Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver and can exchange wireless signals with the network according to processing results of the processor 200.

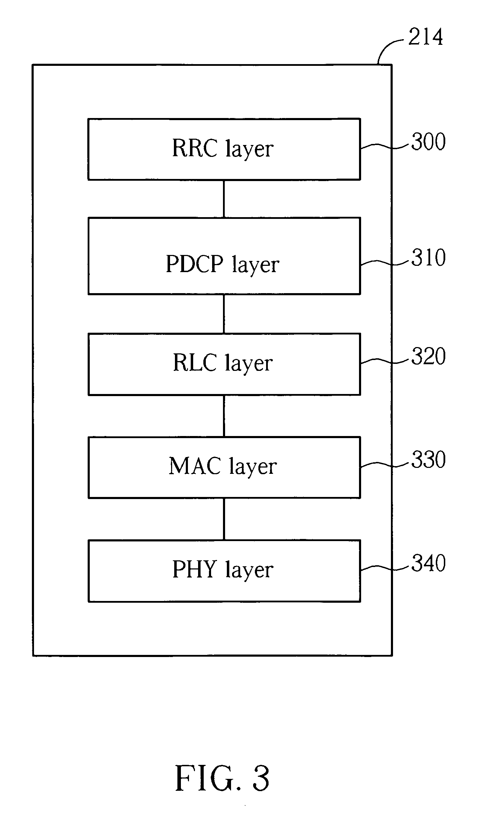

Please refer to Fig. 3, which illustrates a schematic diagram of communication protocol layers for the LTE-Advanced system. The behaviors of some of the protocol layers may be defined in the program code 214 and executed by the processing means 200. The protocol layers from top to bottom are a radio resource control (RRC) layer 300, a packet data convergence protocol (PDCP) layer 310, a radio link control (RLC) layer 320, a medium access control (MAC) layer 330 and a physical (PHY) layer 340. The RRC layer 300 is used for performing broadcast, paging, RRC connection management, measurement reporting and control, and radio bearer control responsible for generating or releasing radio bearers. The PHY layer 340 is used to provide physical channels, e.g. a physical UL control channel (PUCCH) and a physical DL control channel (PDCCH), such that UL control information and data of different UEs can be transmitted and received with low interferences or even without the interferences. The MAC layer 330 is responsible for a hybrid automatic repeat request (HARQ) process, multiplexing logical channels, a random access channel (RACH) procedure and maintaining a UL timing alignment. In each HARQ process, an acknowledgement (ACK) is reported to the network if the MAC data/control packet is received and decoded successfully. Otherwise, an HARQ negative acknowledgement (NACK) is reported to the network.

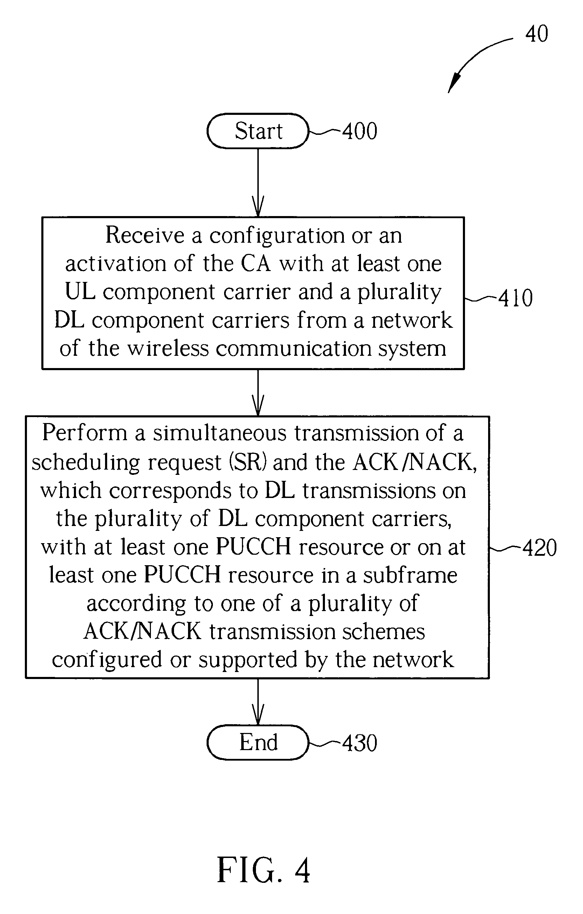

Please refer to Fig. 4, which is a flowchart of a process 40 according to an example of the present disclosure. The process 40 is utilized in a UE of the wireless communication system 10 shown in Fig. 1, to handle a ACK/NACK transmission. The process 40 may be compiled into the program code 214 and includes the following steps:

Step 400: Start.

Step 410: Receive a configuration or an activation of the CA with at least one UL component carrier and a plurality DL component carriers from a network of the wireless communication system.

Step 420: Perform a simultaneous transmission of a scheduling request (SR) and the ACK/NACK, which corresponds to DL transmissions on the plurality of DL component carriers, with at least one PUCCH resource or on at least one PUCCH resource in a subframe according to one of a plurality of ACK/NACK transmission schemes configured or supported by the network.

Step 430: End.

According to the process 40, after the UE receives the configuration or the activation of the CA with the at least one UL component carrier and the plurality DL component carriers from the network of the wireless communication system, the UE starts to transmit and receive data on the at least one UL component carrier and the plurality DL component carriers, respectively. To transmit UL control information efficiently, the UE can perform the simultaneous transmission of the SR and the ACK/NACK, which corresponds to the DL transmissions on the plurality of DL component carriers, with the at least one PUCCH resource or on the at least one PUCCH resource in the subframe according to one of the plurality of ACK/NACK transmission schemes configured or supported by the network. An ACK/NACK transmission scheme may be realized by using at least one of at least one SR resource, a bundling (e.g. a spatial bundling, a full bundling, a component carrier bundling or a bandwidth bundling), a channel selection (e.g. channel representation information or a ACK/NACK resource indication), a sequence selection, a sequence hopping, a cyclic time shift selection, a cyclic time shift hopping, a joint coding, a multi-sequence transmission, a reference signal resource, PUCCH format 1/1a/1b symbols of SR resource and a PUCCH format 2 structure in an extended cyclic prefix (CP). In other words, an implementation of the ACK/NACK transmission scheme is realized by using a group of abovementioned techniques or resources. Further, the UE may use one of the PUCCH format 1/1a/1b for the ACK/NACK transmission scheme or the simultaneous transmission of the SR and the ACK/NACK. Part of the plurality of ACK/NACK transmission schemes are illustrated as follows.

For an ACK/NACK transmission scheme using the at least one SR resource, the UE performs the simultaneous transmission of the SR and the ACK/NACK by using the at least one SR resource to carry the ACK/NACK information when only one ACK/NACK resource (e.g. PUCCH region) is required for the transmission of the ACK/NACK. Alternatively, for another ACK/NACK transmission scheme using the at least one SR resource, the UE performs the simultaneous transmission of the SR and the ACK/NACK by using the at least one SR resource to carry the ACK/NACK information of one of at least one ACK/NACK resource (e.g. the one on the same PUCCH region), when the at least one ACK/NACK resource (e.g. PUCCH regions) are required for the transmission of the ACK/NACK, and the ACK/NACK information of the rest of the at least one ACK/NACK resource may be transmitted or dropped at the same time.

For an ACK/NACK transmission scheme using the bundling which may be the spatial bundling, the full bundling, the component carrier bundling or the bandwidth bundling, the UE bundles the ACK/NACK information as the ACK/NACK (e.g. corresponding to the plurality of DL component carriers) on an ACK/NACK resource (e.g. PUCCH region) and transmitting the ACK/NACK on a SR resource. In addition, the SR resource (e.g. PUCCH resource index for the SR) and the ACK/NACK resource may be of a same or different PUCCH resource. When the UE is configured with the at least one SR resource, the UE can bundle the ACK/NACK information as the ACK/NACK on the ACK/NACK resource and transmit the ACK/NACK on one of the at least one SR resource, wherein the one of the at least one SR resource and the ACK/NACK resource are of a same PUCCH resource where the same region but with different cyclic time shifts is possible. A DL assignment index is carried in a RRC signaling or on a PDCCH for DL transmissions on the plurality DL component carriers for supporting the ACK/NACK transmission scheme using the bundling.

When the UE is configured with the at least one SR resource and an ACK/NACK transmission scheme using the channel selection is used, the UE performs the channel selection, and multiplexes the ACK/NACK information as the ACK/NACK on at least one ACK/NACK resource into a first ACK/NACK resource. Then, the UE transmits the ACK/NACK on a first SR resource of the at least one SR resource if the first SR resource and the first ACK/NAC resource are of a same PUCCH resource. Alternatively, the UE may also transmit the ACK/NACK on one of the at least one SR resource if a number of the at least one SR resource configured to the UE and a number of the at least one ACK/NACK resources are the same, where the one of the at least one SR resource and a ACK/NACK resource after channel selection or the ACK/NACK resource are of a same PUCCH resource. Oppositely, if an only SR source configured to the UE and the first ACK/NACK resource are of different PUCCH resources, the UE transmits the ACK/NACK on the first ACK/NACK resource and transmits the SR simultaneously on the only SR resource. An Acknowledgement resource index is carried in the RRC signaling or on the PDCCH for DL transmissions on the plurality DL component carriers for supporting the ACK/NACK transmission scheme using the channel selection.

For an ACK/NACK transmission scheme using the multi-sequence transmission, the UE is configured with the at least one SR resource. Then, the UE transmits the ACK/NACK information scheduled on each of at least one ACK/NACK resource on a corresponding SR resource of the at least one SR resource, if the number of the at least one SR resource and the number of the at least one ACK/NACK resource are the same, and the each of the at least one ACK/NACK resource and the corresponding SR resource of the at least one SR resource are of a same PUCCH resource. On the other hand, if an only SR resource configured to the UE and a second ACK/NACK resource of the at least one ACK/NACK resource are of a same PUCCH resource, the UE transmits the ACK/NACK information scheduled on the second ACK/NACK resource of the at least one ACK/NACK resource on the SR only resource. At the same time, the UE also transmits the ACK/NACK information on the rest of the at least one ACK/NACK resource simultaneously, where the rest of the at least one ACK/NACK resource is different from the second ACK/NACK resource of the at least one ACK/NACK resource.

For an ACK/NACK transmission scheme using the PUCCH format 1/1a/1b symbols of SR resource, the UE transmits the SR by using one of reference signal (RS) symbols for reference signals or one of 8 data symbols if the ACK/NACK for DL transmissions on the plurality DL component carriers is multiplexed in a structure similar to the PUCCH format 1/1a/1b structure. For example, 16 coded bits or 8 information bits on 8 data symbols are used when using the one of RS symbols for reference signals. Similarly, 14 coded bits or 7 information bits on 7 data symbols are used when using the one of 8 data symbols. On the other hand, for an ACK/NACK transmission scheme using the joint coding (e.g. by using the PUCCH format 2 or a new DFT-spread OFDM (DFTS-OFDM) format), the UE jointly encodes the SR and the ACK/NACK (e.g. 10 information bits in total) in a PUCCH format for the simultaneous transmission of the SR and the ACK/NACK, where a normal cyclic prefix is applied for each subframe of a frame structure.

For an ACK/NACK transmission scheme using the reference signal resource, the UE transmits the SR by using one of the RS symbols for reference signals (e.g. each per slot), if the ACK/NACK for DL transmissions on the plurality DL component carriers is multiplexed in a structure similar to a PUCCH format 2/2a/2b structure. Further, the UE enables the ACK/NACK transmission scheme when the UE does not move or moves slowly, i.e., in a low Doppler situation. In this situation, the UE does not scramble the SR by using a length-31 Gold sequence such that the network can easily performs a blind decoding or a hypothesis testing to decode the ACK/NACK and the SR without introducing much complexity. On the other hand, for an ACK/NACK transmission scheme using the PUCCH format 2 structure, the UE jointly encodes and multiplexes the SR and the ACK/NACK by using a Reed-Muller based block code (20, K(ACK/NACK)+K(SR)), where a puncturing or a rate matching may be used. In detail, when the largest number of information bits supported by the Reed-Muller based block code is 13, the UE uses 1 and 12 information bits for the SR and the ACK/NACK, respectively. The Reed-Muller based block code generates a codeword (e.g. each 2 mapped to 1 data symbol) of 20 bits. The extended cyclic prefix is applied for each subframe of the frame structure.

According to at least one of the plurality of ACK/NACK transmission schemes configured or supported by the network, if the at least one PUCCH resource is required for performing the simultaneous transmission of the SR and the ACK/NACK, the UE uses the at least one SR resource for transmitting the ACK/NACK or using a SR resource for either transmitting the SR or the ACK/NACK. Alternatively, if only one PUCCH resource is required for performing the simultaneous transmission of the SR and the ACK/NACK, the UE uses a SR resource for transmitting the ACK/NACK, using a reference symbol to carry the SR, using at least one data symbol to carrier the SR or jointly encoding the SR with the ACK/NACK (e.g. by a PUCCH format 2 in a normal CP case, or by the PUCCH format 2 in an extended CP case with Reed-Muller base block code). On the other hand, when the SR is simultaneously transmitted by using the plurality of ACK/NACK transmission schemes configured or supported by the network for DL transmissions on the plurality of DL component carriers, the network configures at least one SR resource so that at least one ACK/NACK resource after performing the multiplexing, the bundling or the joint coding and the at least one SR resource are always of a same at least one PUCCH resource (e.g. PUCCH region) . Please note that, an ACK/NACK transmission or the simultaneous transmission of the SR and the ACK/NACK with the at least one PUCCH resource or on the at least one PUCCH resource may be only supported for adjacent PUCCH resources so as to reduce peak to average power ratio (PAPR).

Therefore, according to above illustrations and the process 40, when the SR is simultaneously transmitted with the plurality of ACK/NACK transmission schemes for the plurality of DL component carriers, the network configures the at least one SR resource and the at least one ACK/NACK resource on the same PUCCH resources (e.g. PUCCH region) to reduce the PAPR.

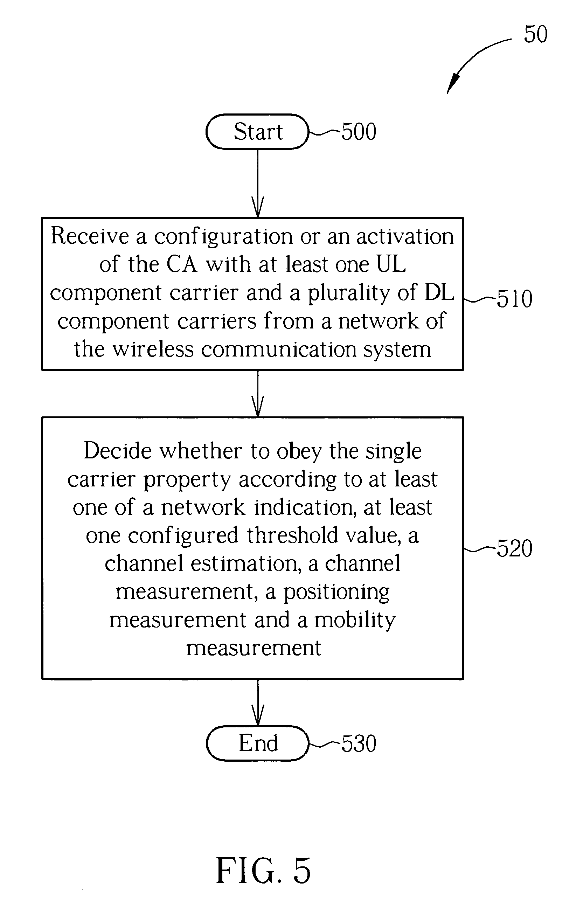

Please refer to Fig. 5, which is a flowchart of a process 50 according to an example of the present disclosure. The process 50 is utilized in a UE of the wireless communication system 10 shown in Fig. 1, to handle a single carrier property when performing a UL control information transmission. The process 50 may be compiled into the program code 214 and includes the following steps:

Step 500: Start.

Step 510: Receive a configuration or an activation of the CA with at least one UL component carrier and a plurality of DL component carriers from a network of the wireless communication system.

Step 520: Decide whether to obey the single carrier property according to at least one of a network indication, at least one configured threshold value, a channel estimation, a channel measurement, a positioning measurement and a mobility measurement.

Step 530: End.

According to the process 50, after the UE receives the configuration or the activation of the CA with the at least one UL component carrier and the plurality of DL component carriers from the network of the wireless communication system, the UE starts to transmit and receive data on the plurality of UL and DL component carriers, respectively. Since a problem of PAPR is reduced due to improved implementation of the UE, the UE can decide whether to obey the single carrier property according to at least one of the network indication, the at least one configured threshold value, the channel estimation, the channel measurement, the positioning measurement and the mobility measurement, when performing the UL control information transmission. Therefore, flexibility of the UL control information transmission is increased, e.g., more PUCCH resources can be used for performing the UL control information transmission, without a constraint of the single carrier property.

On the other hand, when the ACK/NACK transmission or a simultaneous transmission of the SR and the ACK/NACK requires a plurality of PUCCH resources for DL transmissions on the plurality of DL component carriers, the UE decides whether to perform a multi-sequence transmission or whether performing an ACK/NACK transmission only on a SR resource according to the decision of whether to obey the single carrier property. Alternatively, when the UE is closed to a base station, with a good channel condition, with a small/limited power level or with a small/limited power headroom (e.g. correspond to data transmission) compared to corresponding at least one threshold value of the at least one configured threshold value, the power required for the UE to perform transmissions on the UL is small. Therefore, the UE does not need to obey the single carrier property for necessary UL control information transmission on the plurality of PUCCH resources (e.g. an ACK/NACK multi-sequence transmission). Besides, the at least one configured threshold value is compared with or examined or used for at least one of a power headroom calculation, a power level calculation (e.g. by using a power control command), a path loss measurement, the channel measurement, the mobility measurement and the positioning measurement.

Therefore, according to above illustrations and the process 50, the UE does not need to obey the single carrier property in some scenarios or according to certain conditions, when performing the UL control information transmission. The benefit is that more PUCCH resources can be used for performing the transmission of the UL control information and resource allocation for the UL control information also becomes more flexible.

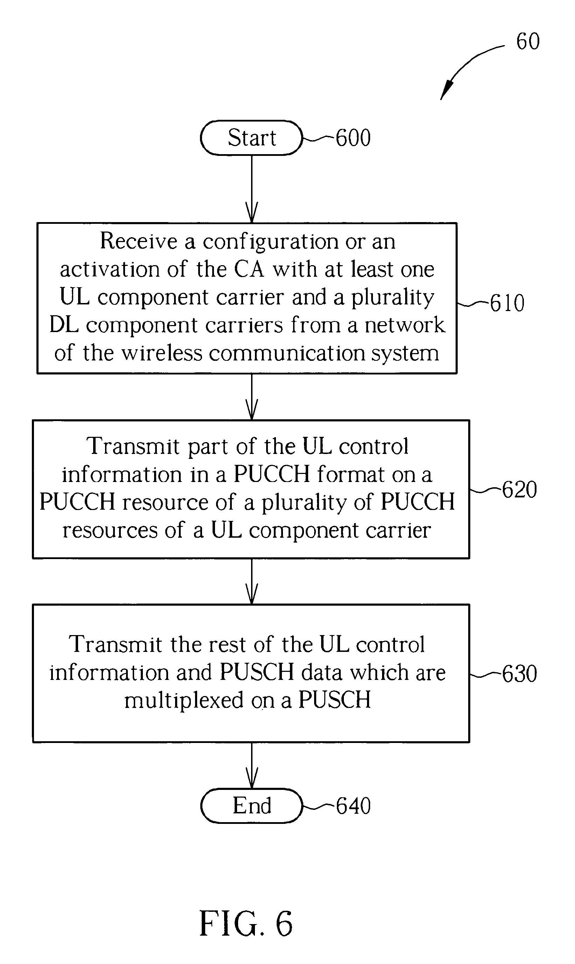

Please refer to Fig. 6, which is a flowchart of a process 60 according to an example of the present disclosure. The process 60 is utilized in a UE of the wireless communication system 10 shown in Fig. 1, to handle a UL control information transmission. The process 60 may be compiled into the program code 214 and includes the following steps:

Step 600: Start.

Step 610: Receive a configuration or an activation of the CA with at least one UL component carrier and a plurality DL component carriers from a network of the wireless communication system.

Step 620: Transmit part of the UL control information in a PUCCH format on a PUCCH resource of a plurality of PUCCH resources of a UL component carrier.

Step 630: Transmit the rest of the UL control information and PUSCH data which are multiplexed on a PUSCH.

Step 640: End.

According to the process 60, after the UE receives the configuration or the activation of the CA with the at least one UL component carrier and the plurality DL component carriers from the network of the wireless communication system, the UE starts to receive data on the plurality DL component carriers from the network. For performing the UL control information transmission, the UE transmits part of the UL control information (e.g. a channel quality indicator (CQI), a precoding matrix indicator (PMI), a rank indicator (RI), a SR or an ACK/NACK) in the PUCCH format on the PUCCH resource of the plurality of PUCCH resources (e.g. to maintain a low PAPR) of the UL component carrier, where the UL control information are required for DL signaling or transmissions on the plurality DL component carriers, a plurality of PUCCH transmission schemes or both. Then, the UE transmits the rest of the UL control information and PUSCH data which are multiplexed on the PUSCH (e.g. when the PUCCH and the PUSCH are scheduled in the same subframe or different subframes).

Alternatively, the UE may transmit the part of UL control information in the PUCCH format on the PUCCH resource of the plurality of PUCCH resources of the UL component carrier according to at least one of priorities of the UL control information, at least one of the plurality of PUCCH transmission schemes, at least one of the plurality of PUCCH resources, at least one PUCCH resource index, a transmission power limitation of the UE, a transmission power headroom of the UE, content of UL control information, a PUCCH scheduling timing and a PUSCH scheduling timing (e.g. more important UL control information on PUCCH (when PUCCH is scheduled earlier than the PUSCH) or PUSCH (when the PUSCH is scheduled earlier than the PUCCH)). For example, the priorities of the UL control information in high to low priority order can be the SR, the ACK/NACK, the CQI, the PMI and the RI. Furthermore, if a sounding reference signal (SRS) and the UL control information are scheduled in a same subframe, the UE transmits the SRS on the PUCCH or the PUSCH according to at least one of the PUCCH format for transmitting the UL control information (e.g. PUCCH format 1a/1b with shorten format for the SRS), whether the plurality of PUCCH resources are required, comparison of a priority of the SRS and the priorities of the UL control information and the SRS bandwidth.

On the other hand, the plurality of PUCCH transmission schemes may include at least one transmission scheme of ACK/NACK, at least one simultaneous transmission scheme of SR and ACK/NACK or at least one multiplexing scheme of channel state indicator (CSI) and ACK/NACK. In this situation, the PUCCH and the PUSCH are scheduled in a same subframe or in different subframes. A location or mapping of the rest of the UL control information on the PUSCH is decided according to at least one of modulation and coding scheme (MCS), a resource offset of the rest of the UL control information, an interleaving scheme, a puncturing scheme and a multiplexing scheme.

Since the UE can only use one of the PUCCH and the PUSCH to transmit the UL control information in the LTE system, the resource is not sufficient for the UL control information corresponding to the transmissions on the plurality of DL component carriers. To solve this problem, above illustrations and the process 60 are disclosed while maintaining a single carrier property. Accordingly, the UE can transmit the UL control information corresponding to the transmissions on the plurality of DL component carriers to the network by using more resources provided by both the PUCCH and the PUSCH.

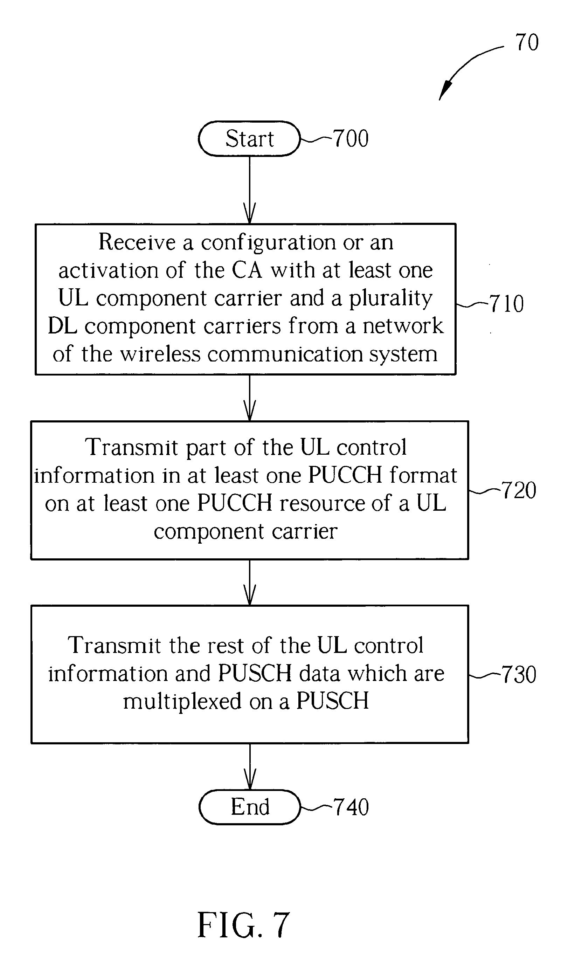

Please refer to Fig. 7, which is a flowchart of a process 70 according to an example of the present disclosure. The process 70 is utilized in a UE of the wireless communication system 10 shown in Fig. 1, to handle a UL control information transmission. The process 70 may be compiled into the program code 214 and includes the following steps:

Step 700: Start.

Step 710: Receive a configuration or an activation of the CA with at least one UL component carrier and a plurality DL component carriers from a network of the wireless communication system.

Step 720: Transmit part of the UL control information in at least one PUCCH format on at least one PUCCH resource of a UL component carrier.

Step 730: Transmit the rest of the UL control information and PUSCH data which are multiplexed on a PUSCH.

Step 740: End.

According to the process 70, after the UE receives the configuration or the activation of the CA with the at least one UL component carrier and the plurality DL component carriers from the network of the wireless communication system, the UE starts to receive data on the plurality DL component carriers from the network. For performing the UL control information transmission, the UE transmits part of the UL control information (e.g. a CQI, a PMI, a RI, a SR or an ACK/NACK) in the at least one PUCCH format on the at least one PUCCH resource of the UL component carrier, i.e., possibly breaking the single carrier property, where the UL control information are required for DL signaling or transmissions on the plurality DL component carriers, a plurality of PUCCH transmission schemes or both. Then, if there is the rest of the UL control information to be transmitted, the UE transmits the rest of the UL control information and PUSCH data which are multiplexed on the PUSCH (e.g. when the PUCCH and the PUSCH are scheduled in the same subframe or different subframes) . Further, the UE can also transmit the part of UL control information in the at least one PUCCH format on a group of the at least one PUCCH resource and the single carrier property is broken, if at least one PUCCH resource in the group of the at least one PUCCH resource are adjacent.

Alternatively, the UE may transmit the part of UL control information in the at least one PUCCH format on the at least one PUCCH resource of the UL component carrier according to at least one of priorities of the UL control information, at least one of the plurality of PUCCH transmission schemes, at least one of the at least one PUCCH resource, at least one PUCCH resource index, a transmission power limitation of the UE, a transmission power headroom of the UE, content of UL control information, a PUCCH scheduling timing and a PUSCH scheduling timing (e.g. more important UL control information on PUCCH (when the PUCCH is scheduled earlier than the PUSCH) or PUSCH (when PUSCH is scheduled earlier than the PUCCH)). For example, the priorities of the UL control information in high to low priority order can be the SR, the ACK/NACK, the CQI, the PMI and the RI. Furthermore, if a SRS and the UL control information are scheduled in a same subframe, the UE transmits the SRS on the PUCCH or the PUSCH according to at least one of the at least one PUCCH format for transmitting the UL control information (e.g. PUCCH format 1a/1b with shorten format for the SRS), whether the at least one PUCCH resource is required, comparison of a priority of the SRS and the priorities of the UL control information and the SRS bandwidth.

On the other hand, the plurality of PUCCH transmission schemes may include at least one transmission scheme of ACK/NACK, at least one simultaneous transmission scheme of SR and ACK/NACK or at least one multiplexing scheme of a CSI and ACK/NACK. Besides, the PUCCH and the PUSCH are scheduled in a same subframe or in different subframes. A location or mapping of the rest of the UL control information on the PUSCH is decided according to at least one of a modulation and coding scheme (MCS), a resource offset of the rest of the UL control information, an interleaving scheme, a puncturing scheme and a multiplexing scheme.

Since the UE can only use one of the PUCCH and the PUSCH to transmit the UL control information in the LTE system, the resource is not sufficient for the UL control information corresponding to the transmissions on the plurality of DL component carriers. To solve this problem, above illustrations and the process 70 are disclosed without maintaining a single carrier property. Accordingly, the UE can transmit the UL control information corresponding to the transmissions on the plurality of DL component carriers to the network by using more resources provided by both the PUCCH and the PUSCH. Besides, it is easier for the network to allocate resource to the UE with CA without maintaining the single carrier property.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

In conclusion, a UE in the LTE system can only perform the transmissions and receptions on a UL component carrier and a DL component carrier, respectively. Therefore, resources of UL control channels are sufficient for a UL control information transmission regarding feedbacks to receptions on a DL component carrier or other control information. Besides, the UE can only select the one of the PUCCH and the PUSCH to transmit the UL control information but not both in the LTE system so as to maintain the single carrier property, i.e., the low PAPR. However, the UE in the LTE-A system can perform the transmissions and the receptions on multiple UL component carriers and multiple DL component carriers, respectively. The resources of the UL control channels designed for the LTE system are not sufficient for the UL control information transmission since a large amount of the UL control information corresponding to the receptions on the multiple DL component carriers as well as the other control information are needed to be transmitted. Therefore, additional resources and novel resource allocation methods must be developed for the increased UL control information and data transmissions on the UL. Accordingly, concepts including a simultaneous transmission of a SR and an ACK/NACK, using both the PUCCH and the PUSCH at the same time and breaking the single carrier property are used to solve abovementioned problems. The examples and means are provided for illustration of the UE using these concepts to operate in the LTE-A system with the CA.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling an acknowledgement/negative acknowledgement (ACK/NACK) transmission for a mobile device with a carrier aggregation (CA) in a wireless communication system, the method comprising:
receiving a configuration or an activation of the CA with at least
one uplink (UL) component carrier and a plurality downlink (DL) component carriers from a network of the wireless communication system; and
performing a simultaneous transmission of a scheduling request
(SR) and the ACK/NACK, which corresponds to DL transmissions on the plurality of DL component carriers, with at least one PUCCH resource or on at least one PUCCH resource in a subframe according to one of a plurality of ACK/NACK transmission schemes configured or supported by the network.

2. The method of claim 1, wherein at least one of at least one SR resource, a bundling, a channel selection, a sequence selection, a sequence hopping, a cyclic time shift selection, a cyclic time shift hopping, a joint coding, a multi-sequence transmission, a reference signal resource, PUCCH format 1/1a/1b symbols of SR resource, and a PUCCH format 2 structure in an extended cyclic prefix (CP) case is used by each of the plurality of ACK/NACK transmission schemes configured or supported by the network.

3. The method of claim 2 further comprising for an ACK/NACK transmission scheme using the at least one SR resource, performing the simultaneous transmission of the SR and the ACK/NACK by using the at least one SR resource to carry the ACK/NACK information when only one ACK/NACK resource is required for the transmission of the ACK/NACK.

4. The method of claim 2 further comprising for an ACK/NACK transmission scheme using the at least one SR resource, performing the simultaneous transmission of the SR and the ACK/NACK by using the at least one SR resource to carry the ACK/NACK information of at least one ACK/NACK resource, when the at least one ACK/NACK resource is required for the transmission of the ACK/NACK.

5. The method of claim 4 further comprising transmitting or dropping the ACK/NACK information of the rest of the at least one ACK/NACK resource.

6. The method of claim 2 further comprising for an ACK/NACK transmission scheme using the bundling, bundling the ACK/NACK information as the ACK/NACK on an ACK/NACK resource and transmitting the ACK/NACK on a SR resource configured by the network.

7. The method of claim 6, wherein the SR resource and the ACK/NACK resource are of a same PUCCH resource; or the SR resource and the ACK/NACK resource are of different PUCCH resources.

8. The method of claim 6 further comprising:
bundling the ACK/NACK information as the ACK/NACK on the ACK/NACK
resource; and
transmitting the ACK/NACK on one of the at least one SR resource,
when the mobile device is configured with the at least one SR resource;
wherein the one of the at least one SR resource and the ACK/NACK
resource are of a same PUCCH resource.

9. The method of claim 6, wherein a DL assignment index is carried in a radio resource control (RRC) signaling or on a physical DL control channel (PDCCH) for DL transmissions on the plurality DL component carriers for supporting the ACK/NACK transmission scheme using the bundling.

10. The method of claim 2 further comprising for an ACK/NACK
transmission scheme using the channel selection and the mobile device being configured with the at least one SR resource, performing the channel selection;
multiplexing the ACK/NACK information as the ACK/NACK on at least
one ACK/NACK resource into a first ACK/NACK resource; and transmitting the ACK/NACK on a first SR resource if the first SR
resource and the first ACK/NACK resource are of a same PUCCH resource.

11. The method of claim 10 further comprising transmitting the
ACK/NACK on the first ACK/NACK resource and transmitting the SR simultaneously on a SR resource which is the only SR resource configured to the mobile device, if the SR source and the first ACK/NACK resource are of different PUCCH resources.

12. The method of claim 10, wherein an Acknowledgement resource index is carried in the RRC signaling or on the PDCCH for DL transmissions on the plurality DL component carriers for supporting the ACK/NACK transmission scheme using the channel selection.

13. The method of claim 10 further comprising transmitting the
ACK/NACK on one of the at least one SR resource if a number of the at least one SR resource configured to the mobile device and a number of the at least one ACK/NACK resource are the same, wherein the one of the at least one SR resource and an ACK/NACK resource after channel selection or the ACK/NACK resource are of a same PUCCH resource.

14. The method of claim 2, wherein for an ACK/NACK transmission scheme using the multi-sequence transmission, the mobile device is configured with the at least one SR resource.

15. The method of claim 14 further comprising transmitting the
ACK/NACK information scheduled on each of at least one ACK/NACK resource on a corresponding SR resource of the at least one SR resource, if the number of the at least one SR resource and the number of the at least one ACK/NACK resource are configured to be the same, wherein the each of the at least one ACK/NACK resource and the corresponding SR resource of the at least one SR resource are of a same PUCCH resource.

16. The method of claim 14 further comprising transmitting the
ACK/NACK information scheduled on a second ACK/NACK resource of the at least one ACK/NACK resource on a SR resource which is the only SR resource configured to the mobile device, if the SR resource and the second ACK/NACK resource of the at least one ACK/NACK resource are of a same PUCCH resource.

17. The method of claim 16 further comprising simultaneously
transmitting the ACK/NACK information on the rest of the at least one ACK/NACK resource, wherein the rest of the at least one ACK/NACK resource is different from the second ACK/NACK resource of the at least one ACK/NACK resource.

18. The method of claim 2 further comprising for an ACK/NACK
transmission scheme using the PUCCH format 1/1a/1b symbols of SR resource, transmitting the SR by using one of reference signal (RS) symbols for reference signals or one of 8 data symbols if the ACK/NACK for DL transmissions on the plurality DL component carriers is multiplexed in a structure similar to the PUCCH format 1/1a/1b structure.

19. The method of claim 2, wherein a PUCCH format for an ACK/NACK
transmission scheme or the simultaneous transmission of the SR and the ACK/NACK is the PUCCH format 1/1a/1b.

20. The method of claim 2 further comprising for an ACK/NACK
transmission scheme using the joint coding, jointly encoding the SR and the ACK/NACK in a PUCCH format for the simultaneous transmission of the SR and the ACK/NACK.

21. The method of claim 20, wherein a normal cyclic prefix is applied
for each subframe of a frame structure.

22. The method of claim 2 further comprising for an ACK/NACK
transmission scheme using the reference signal resource, transmitting the SR by using one of the RS symbols for reference signals, if the ACK/NACK for DL transmissions on the plurality DL component carriers is multiplexed in a structure similar to a PUCCH format 2/2a/2b structure.

23. The method of claim 22 further comprising enabling the ACK/NACK
transmission scheme for a low Doppler situation.

24. The method of claim 22, wherein the network performs a blind
decoding or a hypothesis testing to decode the ACK/NACK and the SR.

25. The method of claim 22 further comprising not scrambling the SR
by using a length-31 Gold sequence.

26. The method of claim 2 further comprising for an ACK/NACK
transmission scheme using the PUCCH format 2 structure, jointly encoding or multiplexing the SR and the ACK/NACK by using a Reed-Muller based block code (20, K(ACK/NACK)+K(SR)).

27. The method of claim 26, wherein the largest number of information
bits supported by the Reed-Muller based block code is 13.

28. The method of claim 27, wherein the number of information bits
for the SR is 1, and the number of information bits for the ACK/NACK is at most 12.

29. The method of claim 26, wherein the Reed-Muller based block code
generates a codeword of 20 bits.

30. The method of claim 26, wherein the extended cyclic prefix is
applied for each subframe of the frame structure.

31. The method of claim 2 further comprising using the at least one SR resource for transmitting the ACK/NACK or using a SR resource for either transmitting the SR or the ACK/NACK, if the at least one PUCCH resource is required for performing the simultaneous transmission of the SR and the ACK/NACK, according to at least one of the plurality of ACK/NACK transmission schemes configured or supported by the network.

32. The method of claim 2 further comprising using a SR resource for transmitting the ACK/NACK, using a reference symbol to carry the SR, using at least one data symbol to carry the SR or jointly encoding the SR with the ACK/NACK, if only one PUCCH resource is required for performing the simultaneous transmission of the SR and the ACK/NACK, according to at least one of the plurality of ACK/NACK transmission schemes configured or supported by the network.

33. The method of claim 2, wherein at least one SR resource is
configured by the network so that at least one ACK/NACK resource after performing the multiplexing, the bundling or the joint coding and the at least one SR resource are always of a same at least one PUCCH resource, when the SR is simultaneously transmitted by using the plurality of ACK/NACK transmission schemes configured or supported by the network for DL transmissions on the plurality of DL component carriers.

34. The method of claim 1, wherein an ACK/NACK transmission or the
simultaneous transmission of the SR and the ACK/NACK with the at least one PUCCH resource or on the at least one PUCCH resource is only supported for adjacent PUCCH resources.

35. A method of handling a single carrier property for a mobile device with a carrier aggregation (CA) in a wireless communication system, the method comprising:
receiving a configuration or an activation of the CA with at least
one uplink (UL) component carrier and a plurality of downlink (DL) component carriers from a network of the wireless communication system; and
deciding whether to obey the single carrier property according
to at least one of a network indication, at least one configured threshold value, a channel estimation, a channel measurement, a positioning measurement and a mobility measurement.

36. The method of claim 35, wherein the at least one configured threshold value is compared with or examined or used for at least one of a power headroom calculation, a power level calculation, a path loss measurement, the channel measurement, the mobility measurement and the positioning measurement.

37. The method of claim 35 further comprising deciding whether
performing a multi-sequence transmission or whether performing an acknowledgement/negative acknowledgement (ACK/NACK) transmission only on a SR resource according to the decision of whether to obey the single carrier property, when the ACK/NACK transmission or a simultaneous transmission of the SR and the ACK/NACK requires a plurality of PUCCH resources for DL transmissions on the plurality of DL component carriers.

38. The method of claim 35 further comprising not obeying the single carrier property for necessary UL control information transmission on the plurality of PUCCH resources, when the mobile device is closed to a base station, with a good channel condition, with a small power level, with a limited power level, with a small power headroom or with a limited power headroom compared to corresponding at least one threshold value of the at least one configured threshold value.

39. A method of handling uplink (UL) control information transmission for a mobile device with a carrier aggregation (CA) in a wireless communication system, the method comprising:
receiving a configuration or an activation of the CA with at least
one UL component carrier and a plurality downlink (DL) component carriers from a network of the wireless communication system;
transmitting part of the UL control information in a physical UL
control channel (PUCCH) format on a PUCCH resource of a plurality of PUCCH resources of a UL component carrier; and transmitting the rest of the UL control information and physical
UL shared channel (PUSCH) data which are multiplexed on a PUSCH;
wherein the UL control information are required for DL signaling
or transmissions on the plurality DL component carriers, a plurality of PUCCH transmission schemes or both.

40. The method of claim 39, wherein transmitting the part of UL control information in the PUCCH format on the PUCCH resource of the plurality of PUCCH resources of the UL component carrier comprises transmitting the part of UL control information in the PUCCH format on the PUCCH resource of the plurality of PUCCH resources of the UL component carrier according to at least one of priorities of the UL control information, at least one of the plurality of PUCCH transmission schemes, at least one of the plurality of PUCCH resources, at least one PUCCH resource index, a transmission power limitation of the mobile device, a transmission power headroom of the mobile device, content of UL control information, a PUCCH scheduling timing and a PUSCH scheduling timing.

41. The method of claim 40, wherein the priorities of the UL control information in high to low priority order are the SR, the ACK/NACK, the channel quality indicator (CQI), the precoding matrix indicator (PMI) and the rank indicator (RI).

42. The method of claim 40 further comprising transmitting a sounding reference signal (SRS) on the PUCCH or the PUSCH according to at least one of the PUCCH format for transmitting the UL control information, whether the plurality of PUCCH resources are required, comparison of a priority of the SRS and the priorities of the UL control information and the SRS bandwidth, if the SRS and the UL control information are scheduled in a same subframe.

43. A method of handling uplink (UL) control information transmission for a mobile device with a carrier aggregation (CA) in a wireless communication system, the method comprising:
receiving a configuration or an activation of the CA with at least
one UL component carrier and a plurality downlink (DL) component carriers from a network of the wireless communication system;
transmitting part of the UL control information in at least one
physical UL control channel (PUCCH) format on at least one PUCCH resource of a UL component carrier; and transmitting the rest of the UL control information and physical
UL shared channel (PUSCH) data which are multiplexed on a PUSCH;
wherein the UL control information are required for DL signaling
or transmissions on the plurality DL component carriers, a plurality of PUCCH transmission schemes or both.

44. The method of claim 43, wherein transmitting the part of UL control information in the at least one PUCCH format on the at least one PUCCH resource of the UL component carrier comprises transmitting the part of UL control information in the at least one PUCCH format on a group of the at least one PUCCH resource, if at least one PUCCH resource in the group of the at least one PUCCH resource are adjacent.

45. The method of claim 39 or 43, wherein the plurality of PUCCH
transmission schemes comprises at least one transmission scheme of acknowledgement/negative acknowledgement (ACK/NACK), at least one simultaneous transmission of a scheduling request (SR) and ACK/NACK or at least one multiplexing scheme of channel state indicator (CSI) and ACK/NACK.

46. The method of claim 43, wherein transmitting the part of UL control information in the at least one PUCCH format on the at least one PUCCH resource of the UL component carrier comprises transmitting the part of UL control information in the at least one PUCCH format on the at least one PUCCH resource of the UL component carrier according to at least one of priorities of the UL control information, at least one of the plurality of PUCCH transmission schemes, at least one of the at least one PUCCH resource, at least one PUCCH resource index, a transmission power limitation of the mobile device, a transmission power headroom of the mobile device, content of UL control information, a PUCCH scheduling timing and a PUSCH scheduling timing.

47. The method of claim 46, wherein the priorities of the UL control information in high to low priority order are the SR, the ACK/NACK, the CQI, the precoding matrix indicator (PMI) and the rank indicator (RI).

48. The method of claim 46 further comprising transmitting a sounding reference signal ( SRS ) on the PUCCH or the PUSCH according to at least one of the at least one PUCCH format for transmitting the UL control information, whether the at least one PUCCH resource is required, comparison of a priority of the SRS and the priorities of the UL control information and the SRS bandwidth, if the SRS and the UL control information are scheduled in a same subframe.

49. The method of claim 39 or 43, wherein the PUCCH and the PUSCH are
scheduled in a same subframe or in different subframes.
SO.The method of claim 39 or 43, wherein a location or mapping of
the rest of the UL control information on the PUSCH is decided according to at least one of a modulation and coding scheme (MCS), a resource offset of the rest of the UL control information, an interleaving scheme, a puncturing scheme and a multiplexing scheme.
